# EUROPEAN PATENT APPLICATION

(11) **EP 1 434 149 A1**
(43) Date of publication of application: **30.06.2004**
(21) Application number: 02293227.1
(22) Date of filing: 23.12.2002
(51) Int. Cl.: G06F 17/50, H04L 12/26

(54) **Software traffic generator/analyser**

(71) Applicant: ALCATEL, 75008 Paris (FR)
(72) Inventor: Van der Berghe, Steve Roman Michel, 9000 Gent (BE); Gousenbourger, Laurent Pascal Alain, 1120 Bruxelles (BE); Bruynooghe, Bert, 9000 Gent (BE); De Smet, Dick Tony Irene, 2980 Zoersel (BE); Vaneyck, Steven Lea Guillaume, 2090 Overijse (BE)
(74) Representative: Plas, Axel

(57) **Abstract**

Processor program products (1) to be run via a processor-system for generating and/or analysing traffic signals for testing an integrated-circuit-simulation (8) running via said processor-system and designed to handle traffic signals are provided with generic modules (2,3) and specific module (4,5) to increase the re-usability. Said specific modules (4,5) are designed for interfacing said computer program product with a protocol used in said integrated-circuit-simulation (8), like a traffic protocol like an Internet-Protocol or an Asynchronous-Transfer-Mode-Protocol, or like a bus protocol like a flexbus4 protocol or a SPI4.2 protocol. Said generic modules (2,3) operate in dependence of adjustable parameters, like a bandwidth parameter for adjusting the bandwidth of said traffic signals, or like a flow parameter for adjusting the number of flows of the traffic signals.

## Description

The invention relates to a processor program product to be run via a processor-system for generating and/or analysing traffic signals for testing an integrated-circuit-simulation running via said processor-system, which integrated-circuit-simulation is designed to handle traffic signals.

Such an integrated-circuit-simulation for example corresponds with an Application Specific Integrated Circuit or ASIC for example for use in a switch, router, bridge, (de)multiplexer, modem etc.

A prior art processor program product is known from US *5,703,788,* which discloses a library of test programs, an autodetector, an autoverifier, a failure report generator, a tools archiver, and a package information logger.

The known processor program product is disadvantageous, inter alia, due to said prior art processor program product being re-usable insufficiently.

It is an object of the invention, inter alia, of providing a processor program product as defined in the preamble which is better re-usable.

The processor program product according to the invention is characterised in that said processor program product comprises at least one generic module and at least one specific module, with at least one specific module being designed for interfacing said computer program product with a protocol used in said integrated-circuit-simulation.

By providing said processor program product with said generic module which is re-usable in next generations of said processor program product due to being generic, the re-usability of said processor program product has been increased. By providing said processor program product with said specific module which interfaces with a protocol used in said integrated-circuit-simulation, the processor program product can be adapted to the kind of integrated-circuit-simulation to be tested.

Of course, when testing the same kind of integrated-circuit-simulation, the same specific module can also be re-used.

A first embodiment of the processor program product according to the invention is defined by claim 2.

By designing said specific module for interfacing a traffic protocol, integrated-circuit-simulations based upon different traffic protocols can be tested by using the same generic module in combination with different specific modules.

A second embodiment of the processor program product according to the invention is defined by claim 3.

By designing said specific module for interfacing an Internet-Protocol or an Asynchronous-Transfer-Mode-Protocol or an Ethernet-Protocol, integrated-circuit-simulations designed for an Internet environment or an Asynchronous-Transfer-Mode environment or an Ethernet environment can be tested. Of course, further environments are not to be excluded.

A third embodiment of the processor program product according to the invention is defined by claim 4.

By designing said specific module for interfacing a bus protocol, integrated-circuit-simulations based upon different bus protocols can be tested by using the same generic module in combination with different specific modules.

A fourth embodiment of the processor program product according to the invention is defined by claim 5.

By designing said specific module for interfacing a flexbus4 protocol or a SP14.2 (System Physical Interface) protocol, integrated-circuit-simulations designed to have a flexbus4 or a SP14.2 can be tested. Of course, further protocols are not to be excluded.

A fifth embodiment of the processor program product according to the invention is defined by claim 6.

By designing at least one generic module to operate in dependence of adjustable parameters, the test environment can be adjusted.

A sixth embodiment of the processor program product according to the invention is defined by claim 7.

In case of said adjustable parameters comprising a bandwidth parameter, the bandwidth of the traffic signals in the test can be adjusted.

A seventh embodiment of the processor program product according to the invention is defined by claim 8.

In case of said adjustable parameters comprising a flow parameter, the number of flows of the traffic signals in the test can be adjusted. Of course, further adjustable parameters are not to be excluded.

The invention further relates to a processor-system for running a processor program product for generating and/or analysing traffic signals for testing an integrated-circuit-simulation running via said processor-system, which integrated-circuit-simulation is designed to handle traffic signals.

The processor-system according to the invention is characterised in that said processor program product comprises at least one generic module and at least one specific module, with at least one specific module being designed for interfacing said computer program product with a protocol used in said integrated-circuit-simulation.

The invention yet further relates to a method for generating and/or analysing traffic signals for testing an integrated-circuit-simulation running via a processor-system, which integrated-circuit-simulation is designed to handle traffic signals.

The method according to the invention is characterised in that said method comprises at least one generic step and and at least one specific step, with at least one specific step being performed for interfacing with a protocol used in said integrated-circuit-simulation.

Embodiments of the processor-system according to the invention and of the method according to the invention correspond with the embodiments of the processor program product according to the invention.

The invention is based upon an insight, inter alia, that large parts of processor program products for generating and/or analysing traffic signals for testing integrated-circuit-simulations should be re-usable, and is based upon a basic idea, inter alia, that this re-usability can be increased by creating generic modules and specific modules.

The invention solves the problem, inter alia, of providing a processor program product having a better re-usability, and is advantageous, inter alia, in that said specific modules interface with (traffic and bus) protocols used in said integrated-circuit-simulation.

These and other aspects of the invention will be apparent from and elucidated with reference to the embodiments(s) described hereinafter.
Figure 1 illustrates in block diagram form an overview of the processor program product according to the invention, and
Figure 2 illustrates in block diagram form a more detailed view of the processor program product according to the invention for generating traffic signals, and
Figure 3 illustrates in block diagram form a more detailed view of the processor program product according to the invention for analysing traffic signals.

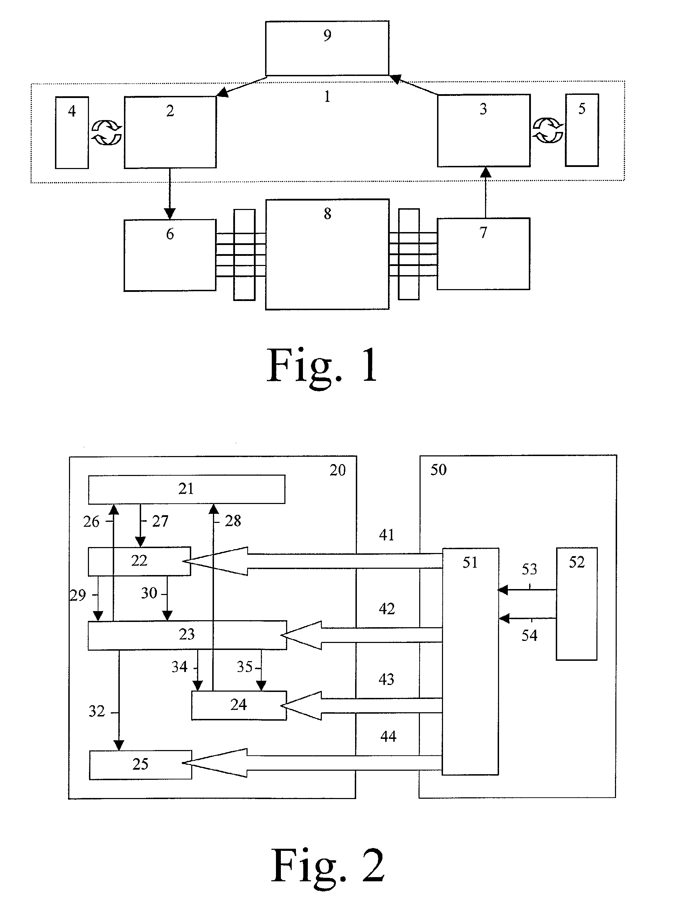

The overview of the processor program product according to the invention shown in Figure 1 comprises a processor program product 1 comprising a software traffic generator 2,4 and a software traffic analyser 3,5. Software traffic generator 2,4 comprises a generic module 2 and a specific module 4, and software traffic analyser 3,5 comprises a generic module 3 and a specific module 5. Generic module 2 receives information from a test segment 9 and sends information to a traffic generator executor 6. Generic module 3 receives information from a traffic analyser executor 7 and sends information to test segment 9. Between both executors 6,7, an integrated-circuit-simulation 8 is situated. Although just one specific module 4,5 is shown in the drawing, more than one may be present, for example coupled serially or parallelly to each other and/or to the corresponding generic module 2,3.

The processor program product 1 runs via a processor-system not shown and comprising one or more processors for generating (via software traffic generator 2,4) and/or analysing (via software traffic analyser 3,5) traffic signals for testing integrated-circuit-simulation 8 running via said processor-system. Such an integrated-circuit-simulation 8 for example corresponds with an Application Specific Integrated Circuit or ASIC still to be realised and is designed to handle traffic signals and is for example to be used in a switch, router, bridge, (de)multiplexer, modem etc.

By providing said processor program product 1 with said generic module 2,3 which is re-usable in next generations of said processor program product 1 due to being generic, the re-usability of said processor program product 1 has been increased. By providing said processor program product 1 with said specific module 4,5 which interfaces with a protocol used in said integrated-circuit-simulation 8, the processor program product 1 can be adapted to the kind of integrated-circuit-simulation 8 to be tested.

Said specific modules 4,5 interface traffic protocols like Internet-Protocols or Asynchronous-Transfer-Mode-Protocols or Ethernet-Protocols and/or interface bus protocols like flexbus4 protocols or SP14.2 protocols (System Physical Interface).

Said generic modules 2,3 operate in dependence of adjustable parameters for adjusting the test environment. These adjustable parameters comprise a bandwidth parameter for adjusting the bandwidth of the traffic signals in the test and/or comprise a flow parameter for adjusting the number of flows of the traffic signals in the test. Of course, further adjustable parameters are not to be excluded.

Said traffic generator executor 6 for example corresponds with a prior art traffic generator testbuilder as disclosed in "Cadence and World Wide Packets" - "Functional verification of broadband access solutions" - success story reference 364 05/02 - www.cadence.com, and forms a tool for opening/executing the processor program product 1 according to the invention (more particularly modules 2,4). Similarly, said traffic analyser executor 7 forms a tool for opening/executing the processor program product 1 according to the invention (more particularly modules 3,5).

The more detailed view of the processor program product 1 according to the invention for generating traffic signals (more particularly modules 2,4) shown in Figure 2 comprises a simulation process 20 of Very High Description Language code or VHDL code and a sequencer process 50. Simulation process 20 comprises a traffic generator executor 21, a TETC<bus >TgTask 22, taking care of the traffic generation on bus/packet level, a TETC-TgTask 23 taking care of the traffic generation on packet flow level, an intermediate processing module 24 and a TETC-Task 25 taking care of the control of the simulation itself, e.g. start/stop the simulation etc. Sequencer process 50 comprises a traffic generator configuration module 51 and a test segment 52. Test generator 51, TETC<bus >TgTask 22, TETC-TgTask 23 and TETC-Task 25 together correspond with generic module 2 in Figure 1, intermediate processing module 24 corresponds with specific module 4 in Figure 1, traffic generator executor 21 corresponds with traffic generator executor 6 in Figure 1, and test segment 52 corresponds with test segment 9 in Figure 1. From test generator 51, four respective arrows 41,42,43,44 flow to the respective TETC<bus >TgTask 22, TETC-TgTask 23, intermediate processing module 24 and TETC-Task 25.

From 23 to 21 via arrow 26 a packet data unit or PDU is sent. From 21 to 22 via arrow 27 a request for traffic data is sent, in answer to this call a packet will be provided to 21. From 22 to 23 via arrow 29 a getPDU command, requesting a packet, is sent, in response a packet will be provided by 23. From 22 to 23 via arrow 30 a getConfig command, requesting configuration information for the module, is sent, in response 23 will provide configuration information which will be handled by 22. From 23 to 25 via arrow 32 a getConfig command, requesting configuration information for the module, is sent, in response 25 will provide configuration information which will be handled by 23. From 23 to 24 via arrow 34 a getPDU command, requesting a packet for the flow to be served, is sent, in response a packet will be created by 24 and passed back to 23. From 23 to 24 via arrow 35 a setTgConfig command, providing the module 24 with configuration information, is sent, this configuration information will be handled by 24. Arrow 41 indicates a bus config command (configuring 22 with bus information depending on the test to be executed), arrow 42 indicates a flow config Tg config command (configuring 23 with traffic information depending on the test to be executed). Arrow 43 indicates a config command (configuring 24 with traffic information regarding the specific modules depending on the test to be executed), and arrow 44 indicates a config command (configuring 25 with information regarding the simulation execution, such as start or stop etc.). From 52 to 51 via arrow 54 a configuration command, embodying the configurations requested by the test that is being run, is sent.

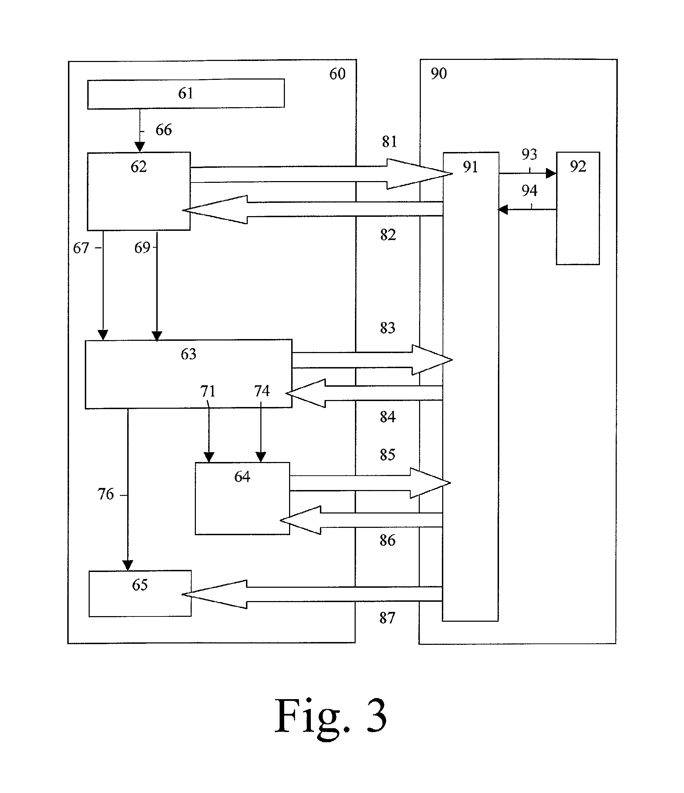

The more detailed view of the processor program product 1 according to the invention for analysing traffic signals (more particularly modules 3,5) shown in Figure 3 comprises a simulation process 60 of Very High Description Language code or VHDL code and a sequencer process 90. Simulation process 60 comprises a traffic analyser executor 61, a TETC<bus >TaTask 62 analysing the traffic on bus/packet level, a TETC-TaTask 63 analysing the traffic on flow related level, an intermediate processing module 64 and a TETC-Task 65 taking care of the control of the simulation itself, e.g. start/stop the simulation etc. Sequencer process 90 comprises a test analyser 91 and a test segment 92. Test analyser 91, TETC<bus >TaTask 62, TETC-TaTask 63 and TETC-Task 65 together correspond with generic module 3 in Figure 1, intermediate processing module 64 corresponds with specific module 5 in Figure 1, traffic analyser executor 61 corresponds with traffic analyser executor 7 in Figure 1, and test segment 92 corresponds with test segment 9 in Figure 1. From test analyser 91, four respective arrows 82,84,86,87 flow to the respective TETC<bus >TaTask 62, TETC-TaTask 63, intermediate processing module 64 and TETC-Task 65. And from the respective TETC<bus >TaTask 62, TETC-TaTask 63 and intermediate processing module 64, three respective arrows 81,83,85 flow back to test analyser 91.

From 61 to 62 via arrow 66 a processPDU command is sent, providing the received data to 62. From 62 to 63 via arrow 67 a processPDU command is sent, this provides 63 with the received packet so it can be analysed on flow level. From 62 to 63 via arrow 69 a getConfig command is sent, requesting configuration information from 63, in response this information is provided by 63. From 63 to 64 via arrow 71 a processPDU command is sent providing the received data to 64. From 63 to 64 via arrow 74 a setConfig command is sent, providing configuration information to 64, which is then handled by this module. From 63 to 65 via arrow 76 a getConfig command is sent, requesting configuration information from 65, which is provided to and handled by 63. Arrow 81 indicates a bus analysis result command, which is the result of the analysis of the received data on bus level, arrow 82 indicates a bus configuration command, providing configuration information on bus level depending on the test to be executed. Arrow 83 indicates a payload analysis result command, which is the result of analysing the received data on a flow level, and arrow 84 indicates a Ta config command, providing 63 with flow configuration information depending on the test to be executed. Arrow 85 indicates an int. analysis result command, which is the result of analysing the received data on a traffic type specific level, and arrow 86 indicates a config command, providing 64 with configuration information depending on the test to be executed, and arrow 87 indicates a config command (configuring 65 with information regarding the simulation execution, such as start or stop etc.). From 91 to 92 via arrow 93 an analysis result command is sent, providing the test with all the results gathered during the simulation. From 92 to 91 via arrow 94 a config command is sent, embodying the configuration commands depending on the test that is being run.

The expression "for" in for example "for generating" and "for testing" and "for interfacing" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprises/included as well. The terms "a" and "an" do not exclude the possible presence of one or more pluralities.

The invention is based upon an insight, inter alia, that large parts of processor program products for generating and/or analysing traffic signals for testing integrated-circuit-simulations should be re-usable, and is based upon a basic idea, inter alia, that this re-usability can be increased by creating generic modules and specific modules.

The invention solves the problem, inter alia, of providing a processor program product having a better re-usability, and is advantageous, inter alia, in that said specific modules interface with (traffic and bus) protocols used in said integrated-circuit-simulation.

## Claims

1. Processor program product (1) to be run via a processor-system for generating and/or analysing traffic signals for testing an integrated-circuit-simulation (8) running via said processor-system, which integrated-circuit-simulation (8) is designed to handle traffic signals,
**characterised in that** said processor program product (1) comprises at least one generic module (2,3) and at least one specific module (4,5), with at least one specific module (4,5) being designed for interfacing said computer program product (1) with a protocol used in said integrated-circuit-simulation (8).

2. Processor program product (1) according to claim 1,
**characterised in that** said protocol comprises a traffic protocol.

3. Processor program product (1) according to claim 2,
**characterised in that** said traffic protocol comprises an Internet-Protocol or an Asynchronous-Transfer-Mode-Protocol or an Ethernet-Protocol.

4. Processor program product (1) according to claim 1, 2 or 3,
**characterised in that** said protocol comprises a bus protocol.

5. Processor program product (1) according to claim 4,
**characterised in that** said bus protocol comprises a flexbus4 protocol or a SP14.2 protocol.

6. Processor program product (1) according to any one of claims 1-5,
**characterised in that** at least one generic module (2,3) is designed to operate in dependence of adjustable parameters.

7. Processor program product (1) according to claim 6,
**characterised in that** said adjustable parameters comprise a bandwidth parameter.

8. Processor program product (1) according to claim 6 or 7,
**characterised in that** said adjustable parameters comprise a flow parameter.

9. Processor-system for running a processor program product (1) for generating and/or analysing traffic signals for testing an integrated-circuit-simulation (8) running via said processor-system, which integrated-circuit-simulation (8) is designed to handle traffic signals,
**characterised in that** said processor program product (1) comprises at least one generic module (2,3) and at least one specific module (4,5), with at least one specific module (4,5) being designed for interfacing said computer program product (1) with a protocol used in said integrated-circuit-simulation (8).

10. Method for generating and/or analysing traffic signals for testing an integrated-circuit-simulation (8) running via a processor-system, which integrated-circuit-simulation (8) is designed to handle traffic signals, **characterised in that** said method comprises at least one generic step and at least one specific step, with at least one specific step being performed for interfacing with a protocol used in said integrated-circuit-simulation (8).
